# EUROPEAN PATENT SPECIFICATION

(11) **EP 3 158 968 B1**
(45) Date of publication and mention of the grant of the patent: **13.04.2022**
(21) Application number: 14895039.7
(22) Date of filing: 17.09.2014
(51) Int. Cl.: A61C 7/14, A61C 7/28

(54) **BRACKET, BRACKET STRAIGHTENING SYSTEM AND TEETH STRAIGHTENING METHOD**
KLAMMER, KLAMMERBEGRADIGUNGSSYSTEM UND ZAHNBEGRADIGUNGSVERFAHREN
BRACKET, SYSTÈME DE REDRESSEMENT À BRACKETS ET PROCÉDÉ DE REDRESSEMENT DES DENTS

(30) Priority: 20.06.2014 CN 201410281231
(43) Date of publication of application: 26.04.2017
(73) Proprietor: Guangzhou OO Medical Scientific Co. Ltd., Guangzhou, Guangdong, 510000 (CN)
(72) Inventor: LI, Ji, Guangzhou, Guangdong 510000 (CN)
(74) Representative: Haseltine Lake Kempner LLP
(86) International application number: PCT/CN2014/086717
(87) International publication number: WO 2015/192502

(56) References cited:
- CN-A- 102 238 924
- CN-A- 104 138 299
- CN-U- 203 943 752
- CN-Y- 201 244 093
- CN-Y- 201 418 189
- KR-A- 20130 047 063
- KR-A- 20130 076 996
- US-A1- 2007 009 849
- US-A1- 2007 128 571
- US-A1- 2009 155 734
- US-A1- 2009 325 120

## Description

### FIELD

The present disclosure relates generally to a fix-orthodontic technique and the field of orthodontics, and more particularly, to a bracket, an orthodontics system with the bracket and an orthodontic method.

### BACKGROUND

As an important unit in the fix-orthodontic technique, a bracket is a correction instrument for correcting deformity of the teeth. The bracket can be bonded directly to the surface of dental crowns, and various types of orthodontic forces can be applied to the tooth by an arch wire via the bracket, so as to realize efficient orthodontic treatment.

At present, all of the traditional brackets are square, with a protruding limb provided on each corner of the bracket for ligating the arch wire. The protruding limb may provide irritation to a patient's mucosa and the patient may feel uncomfortable. In addition, food, such as vegetable leaves, may be always retained by the bracket when the patient is eating, which is detrimental for oral health, or may even cause more accumulation of tartar and dental plaque. US2009/0325120 describes a self-ligating orthodontic bracket including a bracket base, at least one arch wire slot formed in the bracket base adapted to receive an arch wire therein, and a ligation cover which is selectively slidably relative to the bracket base between an open non-ligating position relative to the slot and a closed, ligating position relative to the slot.

### SUMMARY

In view of the problems existing in the prior art, it is an object of the present disclosure to provide a bracket which is comfortable for use in mouth, beneficial for oral hygiene and can reduce tooth demineralization and caries around the bracket.

The invention is defined in the attached independent claim to which reference should now be made. Further, optional features may be found in the sub-claims appended thereto.

In the bracket according to the present disclosure, the main body part and the covering part are adapted to match and be engaged with each other, and the smooth curved surface of the protruding portion and the smooth curved second upper surface of the covering part are adapted to match with each other. Hence to the surface of the bracket facing the mouth and lips is smooth without any protrusion which provides less irritation to mucosa and less discomfort not as traditional brackets used to bring to patient, which is beneficial to oral health. With smooth curved surface, it reduces the accumulation of plaque and tartar, what's more, easier clean-up to the bracket's bottom so as to reduce the risk of demineralization and dental caries.

The bracket according to the present disclosure is easy to use in operation; the device is easy to be produced and operated with low cost, and is safe in use, saving time and manpower.

### BRIEF DESCRIPTION OF THE DRAWINGS

FIG. 1 is a side view illustrating a main body part according to an embodiment of the present disclosure.
FIG. 2 is a side view illustrating a main body part according to an embodiment of the present disclosure.
FIG. 3 is a front view illustrating a main body part according to an embodiment of the present disclosure.
FIG. 4 is a top view illustrating a main body part according to an embodiment of the present disclosure.
FIG. 5 is a side view illustrating a covering part according to an embodiment of the present disclosure.
FIG. 6 is a bottom view illustrating a covering part according to an embodiment of the present disclosure.
FIG. 7 is a side view illustrating a covering part according to an embodiment of the present disclosure.
FIG. 8 is a front view illustrating a main body part and a covering part before assembly according to an embodiment of the present disclosure.
FIG. 9 is a front view illustrating a main body part and a covering part after being assembled according to an embodiment of the present disclosure.
FIG. 10 is a top view illustrating a main body part and a covering part after being assembled according to an embodiment of the present disclosure.
FIG. 11 is a side view illustrating a main body part and a covering part after being assembled according to an embodiment of the present disclosure.
FIG. 12 is a side view illustrating a main body part and a covering part after being assembled according to an embodiment of the present disclosure.
FIG.13 is a side view illustrating a main body part and a covering part after being assembled in the direction of the through hole of the covering part according to an embodiment of the present disclosure.

### Description of reference signs

10 main body part; 110 base plate; 120 fixing plate; 121 first groove; 122 first end portion; 123 second end portion; 124 protruding portion; 125 third groove; 126 first projection; 127 through hole; 20 covering part; 210 second groove; 211 fixing protrusion; 212 fourth groove; 213 second projection; and 214 second recess.

### DETAILED DESCRIPTION OF THE EMBODIMENTS

The following will make a comprehensive description for the present invention referring to drawings related. Although the invention will be described in connection with certain embodiment in accompanying drawings shown below, the invention is not limited to practice in any specific type. The description of embodiment of the invention herein is intended to cover all alternative of the present disclosure and hence understanding to the invention will be through and clear as the invention can be arranged in multiple different ways.

When a feature or element is herein referred to as being "fixed on" another feature or element, it can be directly on the other feature or element or intervening features and/or elements may also be present. It will also be understood that, when a feature or element is referred to as being "connected", "attached" or "coupled" to another feature or element, it can be directly connected, attached or coupled to the other feature or element or intervening features or elements may be present.

Terminology used herein is for the purpose of describing particular embodiments only and is not intended to be limiting of the invention. As used herein, the term "and/or" includes any and all combinations of one or more of the associated listed items.

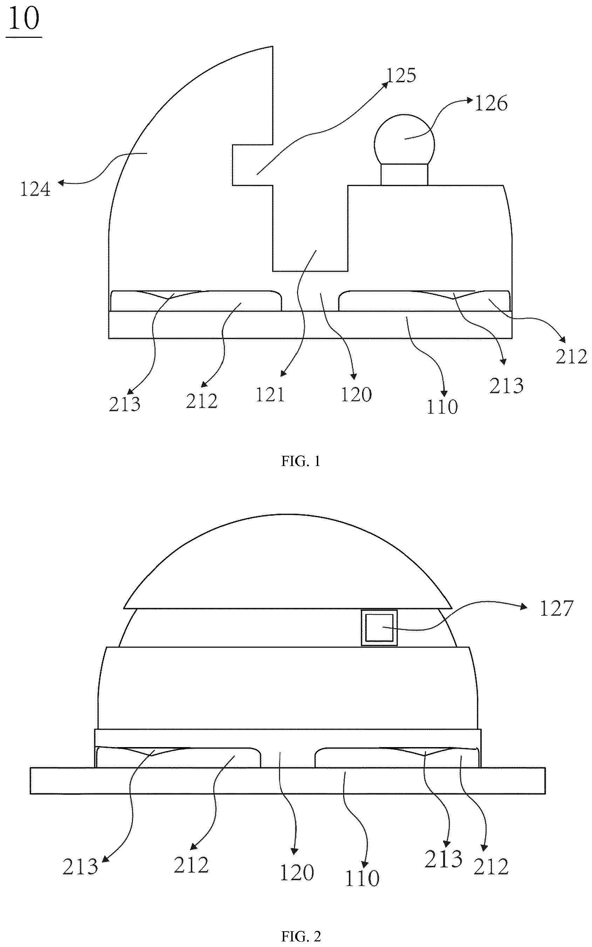

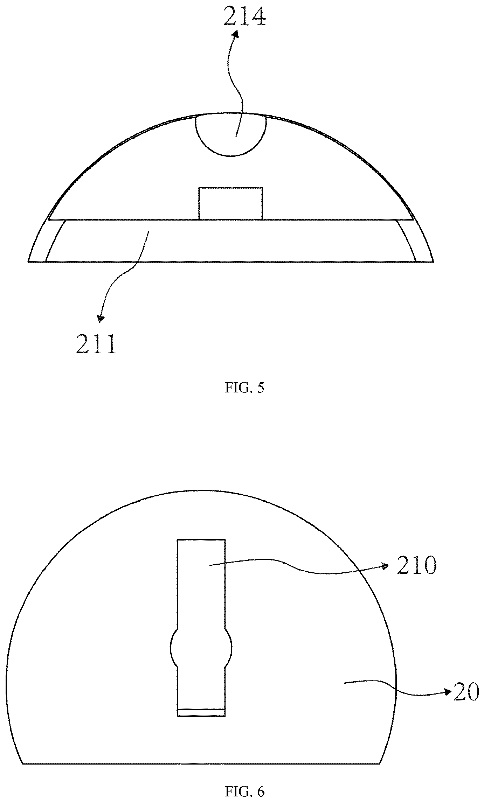

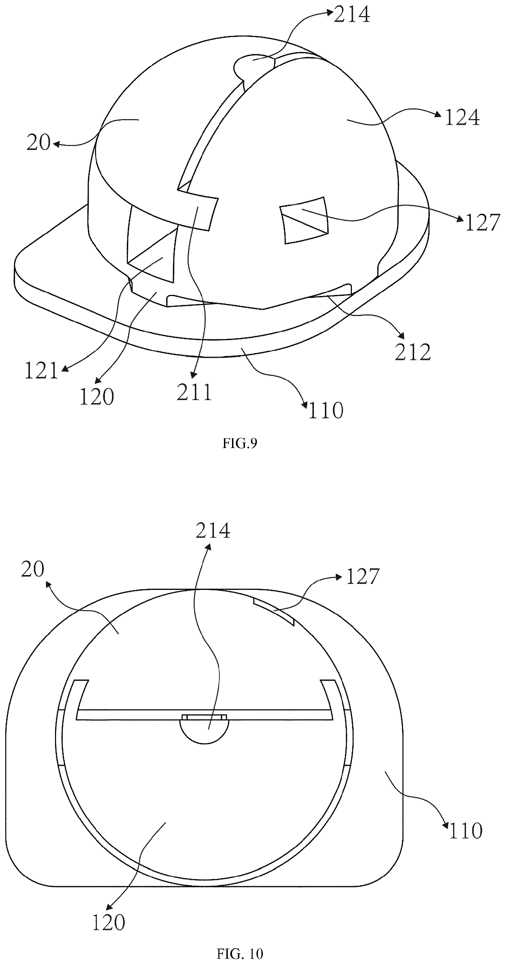

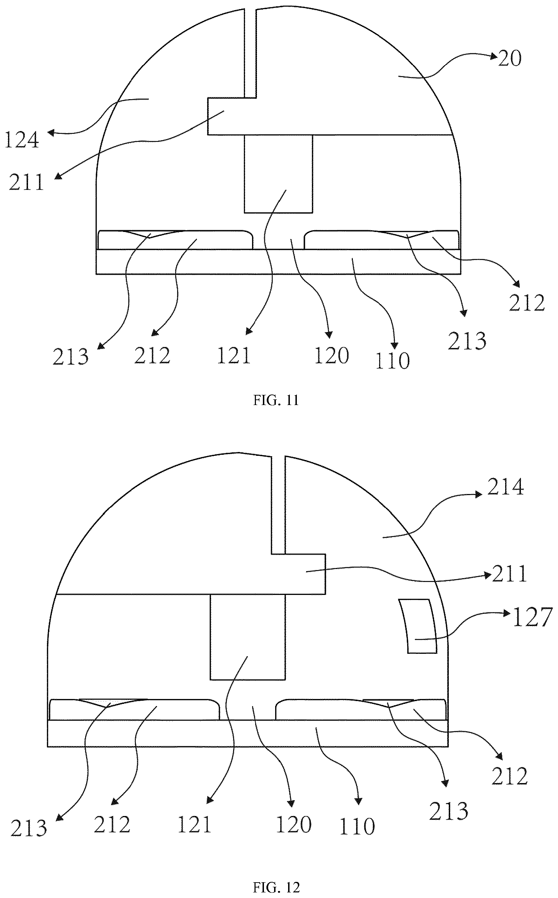

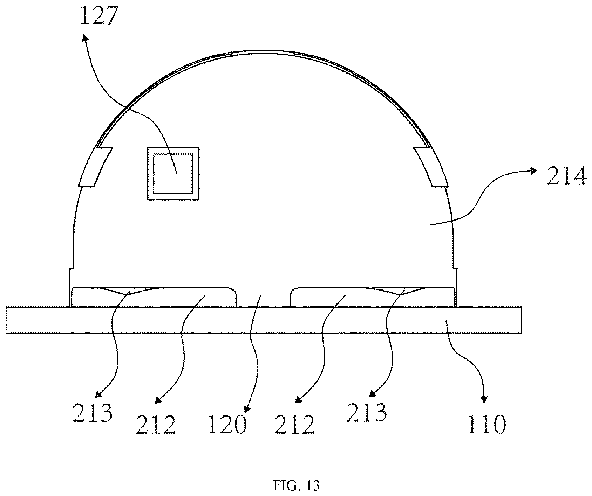

As shown in FIGS. 1-13, a bracket includes a main body part 10 and a covering part 20.

As shown in FIGS. 1-3, the main body part 10 is shown. The main body part 10 has a base plate 110 and a fixing plate 120 fixed on the surface of the base plate 110. The fixing plate 120 is in a shape of a circle. The edges of the base plate 110 are of smooth shape. The base plate 110 has a lower surface and an upper surface. The lower surface of the base plate 110 is a rough reticulation structure, and the lower surface of the base plate 110 is provided with a bonding layer (not shown) which is a specified adhesive.

The diameter position of the fixing plate 120 is provided with a first groove 121 which may be formed as an arch wire slot. The first groove 121 divides the fixing plate 120 into a first end portion 122 and a second end portion 123. The size of the first groove 121 matches with the size of the arch wire. All of edges of the first end 122 of the fixing plate 120 are protruded such that the surface of the first end 122 of the fixing plate 120 has a protruding portion 124. The protruding portion 124 has a smooth curved surface (on the top of the protruding portion 124).

The surface of the second end 123 of the fixing plate 120 is provided with a first projection 126 to form a lock bolt, the first projection 126 is in a shape of cylinder, and the top end of the first projection 126 is provided with a ball structure with a diameter larger than that of the first projection 126. The side surface of the first end 122 of the fixing plate 120 is provide with a through hole 127 through the first end 122 to form a disassembly hole. The through hole 127 is in a shape of rectangle, one end of the through hole 127 opens at the third groove 125, and the other end of the through hole 127 opens at the surface of the covering part 20.

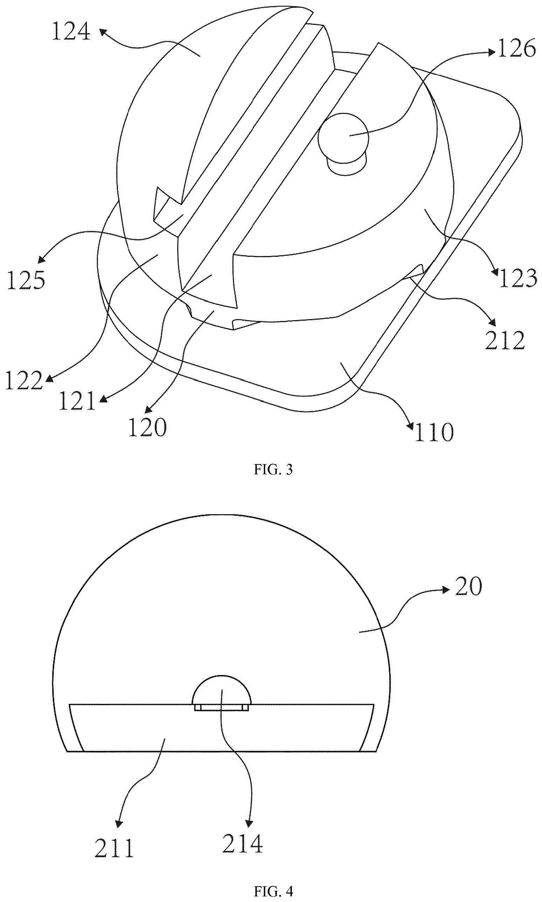

As show in FIGS. 4-7, the covering part 20 is shown. The covering part 20 includes a lower surface and an upper surface. The lower surface of the covering part 20 matches with the surface of the second end portion 123 of the fixing plate 120. The upper surface of the covering part 20 (i.e., the top of the covering part 20) is smooth and curved. After the covering part 20 are engaged with the protruding portion 124, the upper surface of the covering part 20 matches with the surface of the protruding portion 124 to form a spherical surface. After the surface portion of the covering part 20 matching and being engaged with the surface of the first protruding portion 124, a hemispherical structure may be formed. In other embodiments, the surface portion of the covering part 20 and the surface of the first protruding portion 124 can be curved surfaces of other radians to form an elliptical structure. The side surface of the protruding portion 124 facing the first groove 121 is provided with a third groove 125 to form a stop groove. The side surface of the covering part 20 facing the fixing plate 120 is provided with a protruding rim 211 that matches with the third groove 125 to form a fixing protrusion 211.

The lower surface of the covering part 20 is provided with a second groove 210 of an elongated shape to form a guide groove. Along the longitudinal direction of the guide groove, a side end of the guide groove opens at a side surface of the covering part 20 facing the fixing plate 120, and along the transverse direction of the guide groove, the edges of the opening of the guide groove are respectively provided with a flange towards the center of the guide groove to make the size of the opening of the guide groove is less than that of the inside of the guide groove. The two opposite elongated flanges are respectively provided with a semicircular concave edge at the side surface of the covering part 20 facing the main body part 10, to form a window that matches with the ball structure of the first projection 126.

The edge of one side of the fixing plate 120 facing the surface of the base plate 110 is provided with a first recess, and the first recess and the base plate 110 form a fourth groove 212, also known as a ligating groove. There are four fourth grooves 212, and each fourth groove 212 is evenly distributed on the edge of one side of the fixing plate 120 facing the surface of the base plate 110. The outer edges of the fourth grooves are respectively provided with a second projection 213 facing the base plate 110 to form a protection limb to prevent the ligature from slipping.

The surface of the covering part 20 facing the top of the edge of the fixing plate is provided with a second recess 214 in a shape of one-fourth sphere to form a lid's mouth which is adapted to receive a finger to control the opening and closing of the covering part 20 and the main body part 10.

In the embodiment, an orthodontics system with bracket is also provided. The orthodontics system with bracket includes the bracket as mentioned above, an arch wire, an adhesive and auxiliaries. There may be a plurality of brackets, and the number of the brackets depends on actual need.

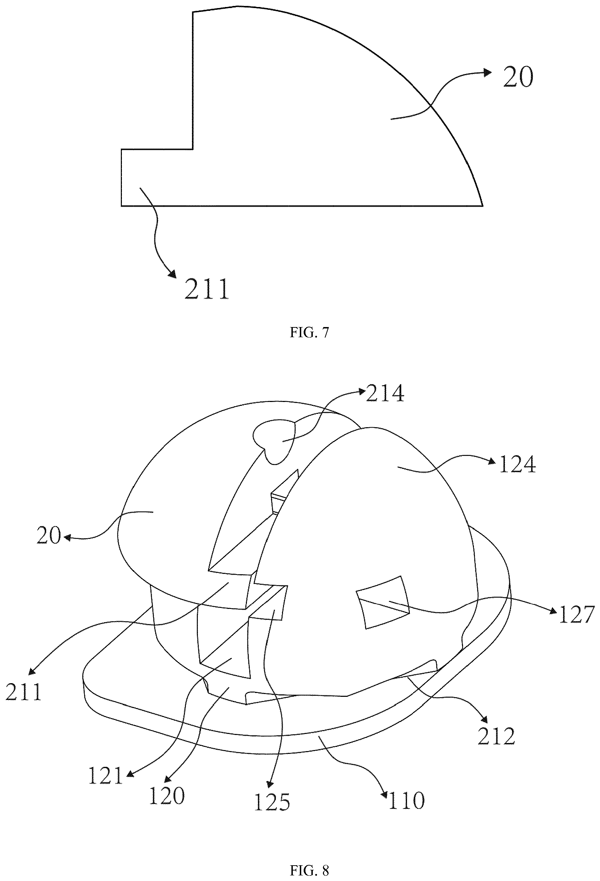

When the orthodontics system with bracket as described in the above embodiment is used in orthodontics, an orthodontic method may be provided, including:
as shown in FIG. 8, adjusting the position of the base plate 110 according to the position of the tooth, and fixing respective fixing plates of a plurality of main body parts 10 of the orthodontics system onto respective surfaces of the teeth of the patient with adhesive;
threading the arch wire in the orthodontics system through the first groove 121 of the main body part 10 of each bracket of the orthodontics system sequentially;
matching the covering part 20 of the bracket of the orthodontics system with the second end portion 123 of the fixing plate 120 of the bracket of the orthodontic system, inserting the first projection 126 into the window of the second groove 210 corresponding to the ball structure, sliding the covering part 20 towards the first end portion 122 of the fixing plate 120, and inserting the fixing protrusion 211 into the third groove 125 of the fixing plate 120, so that the first groove 121 of the main body part 10 and the arch wire are covered by the covering part 20 and the surface of the first protruding portion of the first end of the main body part corresponds to the surface of the covering part 20; and providing a ligature in the fourth groove 212 (ligating groove) of the main body part of each bracket, and fixing the ligature on the arch wire.

With the bracket according to the present disclosure, the main body part 10 and the covering part 20 are adapted to match and be engaged with each other, and the smooth curved surface of the protruding portion 124 and the smooth curved second upper surface of the covering part 20 are adapted to match with each other. Hence the surface of the bracket facing the mouth and lips is smooth without any protrusion which provides less irritation to mucosa and less discomfort not as traditional brackets used to bring to patient, which is beneficial to oral health. With smooth curved surface, it reduces the accumulation of plaque and tartar, what's more, easier clean-up to the bracket's bottom so as to reduce the risk of demineralization and dental caries.

The above are preferred embodiments of the invention described in detail, and should not be deemed as limitations to the scope of the present invention. It should be noted that variations and improvements will become apparent to those skilled in the art to which the present invention pertains without departing from its scope. Therefore, the scope of the present disclosure is defined by the appended claims.

## Claims

1. A bracket, comprising:
a main body part (10) having a fixing plate (120) with an upper surface and a lower surface, the lower surface of the fixing plate (120) is provided with a bonding layer, the upper surface of the fixing plate (120) includes a first groove (121) dividing the upper surface of the fixing plate (120) into a first end portion (122) and a second end portion (122), wherein a protruding portion (124) is provided on the first end portion (122), and wherein an outside surface of the protruding portion (124) is a smooth curved surface; and
a covering part (20) including an upper surface and a lower surface, wherein the lower surface of the covering part matches with a surface of the second end portion, and wherein the upper surface of the covering part (20) is a smooth curved surface; which matches with the surface of the protruding portion (124) to provide a surface which is smooth without any protrusion;
**characterised in that**:
a first projection (126) is provided on the surface of the second end portion, the first projection having a cylindrical shape, and a top end of the first projection being provided with a ball structure having a diameter larger than that of the first projection; and
the lower surface of the covering part is provided with a second groove (210) of an elongated shape, the second groove having an opening size smaller than its inner size, and the opening of the second groove (210) is provided with a window that matches with the first projection.

2. The bracket of claim 1, **characterized in that** a side surface of the protruding portion (124) facing the first groove (121) is provided with a third groove (125), and a side surface of the covering part (20) facing the fixing plate (120) is provided with a protruding rim that matches with the third groove (125).

3. The bracket of claim 2, **characterized in that** the first end portion (123) of the fixing plate (120) is provided with a through hole (127), and one end of the through hole opens at the third groove (125).

4. The bracket of any of claims 1-3 **characterized in that** the fixing plate (120) has a circular shape, and all edges of the first end portion (122) of the main body part are protruded to form the protruding portion (124).

5. The bracket of any of claims 1-3, **characterized in that** the main body part (10) further includes a base plate (110) having an upper surface and a lower surface, the fixing plate (120) is adapted to be fixed on the upper surface of the base plate (110), an edge of one side of the fixing plate (120) facing the upper surface of the base plate (110) is provided with a first recess, and the first recess and the base plate (110) form a fourth groove (212); and
there are at least two fourth grooves (212) evenly distributed on the edge of one side of the fixing plate (120) facing the upper surface of the base plate (110).

6. The bracket of claim 5, **characterized in that** outer edges of the fourth grooves (212) are respectively provided with a second projection facing the base plate (110).

7. The bracket of any of claims 1-3, **characterized in that** the upper surface of the covering part (20) facing an edge of the fixing plate (110) is provided with a second recess (214).

8. An orthodontics system, including an arch wire, **characterized in that** it further comprises the bracket of any one of claims 1-7.

## Patentansprüche

1. Klammer, umfassend:
ein Hauptkörperteil (10), das eine Fixierplatte (120) mit einer Oberseite und einer Unterseite hat, wobei die Unterseite der Fixierplatte (120) mit einer Verbindungsschicht bereitgestellt ist, wobei die Oberseite der Fixierplatte (120) eine erste Nut (121) aufweist, die die Oberseite der Fixierplatte (120) in einen ersten Endabschnitt (122) und einen zweiten Endabschnitt (122) teilt, wobei ein vorspringender Abschnitt (124) auf dem ersten Endabschnitt (122) bereitgestellt ist, und wobei eine Außenseite des vorspringenden Abschnitts (124) eine gleichmäßige gekrümmte Oberfläche ist; und
ein Abdeckteil (20), das eine Oberseite und eine Unterseite aufweist, wobei die Unterseite des Abdeckteils mit einer Oberfläche des zweiten Endabschnitts zusammenpasst, und wobei die Oberseite des Abdeckteils (20) eine glatte gekrümmte Oberfläche ist, die mit der Oberfläche des vorspringenden Abschnitts (124) zusammenpasst, um eine Oberfläche bereitzustellen, die gleichmäßig ist und keine Vorsprünge aufweist; **dadurch gekennzeichnet, dass**:
ein erster Vorsprung (126) auf der Oberfläche des zweiten Endabschnitts bereitgestellt ist, wobei der erste Vorsprung eine zylindrische Form hat, und ein oberes Ende des ersten Vorsprungs mit einer Kugelstruktur bereitgestellt ist, die einen Durchmesser hat, der größer ist als der des ersten Vorsprungs; und die Unterseite des Abdeckteils mit einer zweiten Nut (210) in einer länglichen Form bereitgestellt ist, wobei die zweite Nut eine Öffnungsgröße hat, die kleiner ist als ihre Innengröße, und die Öffnung der zweiten Nut (210) mit einem Fenster bereitgestellt ist, das mit dem ersten Vorsprung zusammenpasst.

2. Klammer nach Anspruch 1, **dadurch gekennzeichnet, dass** eine Seitenfläche des vorspringenden Abschnitts (124), die der ersten Nut (121) zugewandt ist, mit einer dritten Nut (125) bereitgestellt ist, und eine Seitenfläche des Abdeckteils (20), die der Fixierplatte (120) zugewandt ist, mit einem vorspringenden Rand bereitgestellt ist, der mit der dritten Nut (125) zusammenpasst.

3. Klammer nach Anspruch 2, **dadurch gekennzeichnet, dass** der erste Endabschnitt (123) der Fixierplatte (120) mit einem Durchgangsloch (127) bereitgestellt ist und sich ein Ende des Durchgangslochs in die dritte Nut (125) öffnet.

4. Klammer nach einem der Ansprüche 1-3, **dadurch gekennzeichnet, dass** die Fixierplatte (120) eine kreisförmige Form hat und alle Kanten des ersten Endabschnitts (122) des Hauptkörperteils vorspringen, um den vorspringenden Abschnitt (124) zu bilden.

5. Klammer nach einem der Ansprüche 1-3, **dadurch gekennzeichnet, dass** das Hauptkörperteil (10) ferner eine Grundplatte (110) mit einer Oberseite und einer Unterseite aufweist, wobei die Fixierplatte (120) dazu angepasst ist, an der Oberseite der Grundplatte (110) fixiert zu werden, wobei eine Kante einer Seite der Fixierplatte (120), die der Oberseite der Grundplatte (110) zugewandt ist, mit einer ersten Aussparung versehen ist und die erste Aussparung und die Grundplatte (110) eine vierte Nut (212) bilden; und es mindestens zwei vierte Nuten (212) gibt, die gleichmäßig an der Kante der einen Seite der Fixierplatte (120) verteilt sind, die der Oberseite der Grundplatte (110) zugewandt ist.

6. Klammer nach Anspruch 5, **dadurch gekennzeichnet, dass** die Außenkanten der vierten Nuten (212) entsprechend mit einem zweiten Vorsprung bereitgestellt sind, der der Grundplatte (110) zugewandt ist.

7. Klammer nach einem der Ansprüche 1-3, **dadurch gekennzeichnet, dass** die Oberseite des Abdeckteils (20), die einer Kante der Fixierplatte (110) zugewandt ist, mit einer zweiten Aussparung (214) bereitgestellt ist.

8. Orthodontisches System, das einen Bogendraht aufweist, **dadurch gekennzeichnet, dass** es ferner die Klammer nach einem der Ansprüche 1-7 umfasst.

## Revendications

1. Bracket, comprenant :
une partie corps principal (10) présentant une plaque de fixation (120) ayant une surface supérieure et une surface inférieure, la surface inférieure de la plaque de fixation (120) est pourvue d'une couche de liaison, la surface supérieure de la plaque de fixation (120) comprend une première rainure (121) divisant la surface supérieure de la plaque de fixation (120) en une première partie d'extrémité (122) et une seconde partie d'extrémité (122), dans laquelle une partie saillante (124) est prévue sur la première partie d'extrémité (122), et dans laquelle une surface extérieure de la partie saillante (124) est une surface incurvée lisse ; et
une partie de recouvrement (20) comprenant une surface supérieure et une surface inférieure, dans laquelle la surface inférieure de la partie de recouvrement correspond à une surface de la seconde partie d'extrémité, et dans laquelle la surface supérieure de la partie de recouvrement (20) est une surface incurvée lisse ; qui correspond à la surface de la partie saillante (124) pour fournir une surface qui est lisse sans aucune saillie ;
**caractérisée en ce que** :
une première saillie (126) est prévue sur la surface de la seconde partie d'extrémité, la première saillie ayant une forme cylindrique, et une extrémité supérieure de la première saillie étant pourvue d'une structure sphérique ayant un diamètre plus grand que celui de la première saillie ; et
la surface inférieure de la partie de recouvrement est pourvue d'une deuxième rainure (210) de forme allongée, la deuxième rainure ayant une taille d'ouverture plus petite que sa taille interne, et l'ouverture de la deuxième rainure (210) est pourvue d'une fenêtre qui correspond à la première saillie.

2. Bracket selon la revendication 1, **caractérisé en ce qu'**une surface latérale de la partie saillante (124) faisant face à la première rainure (121) est pourvue d'une troisième rainure (125), et une surface latérale de la partie de recouvrement (20) faisant face à la plaque de fixation (120) est pourvue d'un rebord saillant qui correspond à la troisième rainure (125).

3. Bracket selon la revendication 2, **caractérisé en ce que** la première partie d'extrémité (123) de la plaque de fixation (120) est pourvue d'un trou traversant (127), et une extrémité du trou traversant s'ouvre au niveau de la troisième rainure (125).

4. Bracket selon l'une quelconque des revendications 1 à 3 **caractérisé en ce que** la plaque de fixation (120) a une forme circulaire, et tous les bords de la première partie d'extrémité (122) de la partie corps principal sont en saillie pour former la partie saillante (124).

5. Bracket selon l'une quelconque des revendications 1 à 3, **caractérisé en ce que** la partie corps principal (10) comprend en outre une plaque de base (110) ayant une surface supérieure et une surface inférieure, la plaque de fixation (120) est conçue pour être fixée sur la surface supérieure de la plaque de base (110), un bord d'un côté de la plaque de fixation (120) faisant face à la surface supérieure de la plaque de base (110) est pourvu d'un premier évidement, et le premier évidement et la plaque de base (110) forment une quatrième rainure (212) ; et
au moins deux quatrièmes rainures (212) sont réparties uniformément sur le bord d'un côté de la plaque de fixation (120) faisant face à la surface supérieure de la plaque de base (110).

6. Bracket selon la revendication 5, **caractérisé en ce que** les bords externes des quatrièmes rainures (212) sont respectivement pourvus d'une seconde saillie faisant face à la plaque de base (110).

7. Bracket selon l'une quelconque des revendications 1 à 3, **caractérisé en ce que** la surface supérieure de la partie de recouvrement (20) faisant face à un bord de la plaque de fixation (110) est pourvue d'un second évidement (214).

8. Système orthodontique, comprenant un fil pour arc, **caractérisé en ce qu'**il comprend en outre le bracket selon l'une quelconque des revendications 1 à 7.
